# EUROPEAN PATENT APPLICATION

(11) **EP 4 815 091 A1**
(43) Date of publication of application: **30.09.2026**
(21) Application number: 23959201.7
(22) Date of filing: 23.11.2023
(51) Int. Cl.: H01M 10/0563, H01M 10/056

(54) **USE OF DUAL-ION CONDUCTOR COMPOUND IN IMPROVING STABILITY OF INTERFACE LAYER OF ENERGY STORAGE DEVICE**

(71) Applicant: Institute of Physics, Chinese Academy of Sciences, Beijing 100190 (CN)
(72) Inventor: CEN, Guanjun, Beijing 100190 (CN); YU, Hailong, Beijing 100190 (CN); HUANG, Xuejie, Beijing 100190 (CN); ZHAO, Wenwu, Beijing 100190 (CN)
(74) Representative: Potter Clarkson
(86) International application number: PCT/CN2023/133592
(87) International publication number: WO 2025/107229

(57) **Abstract**

The invention provides a use of a dual-ion conductor compound in improving the stability of an interface layer of an energy storage device. The energy storage device includes a lithium-ion energy storage device and a sodium-ion energy storage device, and includes a positive electrode, an electrolyte, and a negative electrode; and during charging and discharging, a cation and a halogen anion of the dual-ion conductor compound are capable of simultaneously migrating back and forth under the driving of an electric field. The invention also provides a method for improving the stability of the mechanical structure of an interface layer between a negative electrode and an electrolyte in an energy storage device. The halogen anion of the dual-ion conductor compound is capable of migrating back and forth under the driving of an electric field during charging and discharging, thereby forming a dynamic self-adaptive interface layer of a halide between the negative electrode and the electrolyte, naturally adjusting the morphology of the interface layer and self-adaptively repairing cracks and pores, generated by the negative electrodedue to volume effects, to ensure an intimate solid-to-solid contact between the negative electrode and the solid electrolyte during stripping/electroplating.

## Description

### Technical Field

The present invention belongs to the technical field of energy storage. In particular, the present invention relates to the use of a dual-ion conductor for improving the stability of the mechanical structure of an interface layer between a negative electrode and an electrolyte in an energy storage device.

### Background Art

Solid-state battery, as a new energy storage technology, is expected to achieve the chemical power supply with high safety, high specific energy, and long-life application requirements, so it has been widely considered. However, solid-state batteries still face some important problems to be solved before they can be applied to large-scale applications.

In the process of solid-state battery assembly, because of the solid/solid rigid interface inside and between layers of key materials, there are some phenomena such as poor contact and interface gap between layers of key materials. In addition, the volume change of high specific energy electrode materials, such as lithium metal, silicon and tin, causes a large number of pores in the negative electrode and in the interface layer between the negative electrode and the electrolyte during the cycling of the cell, which rapidly increases the internal impedance of the cell, and finally leads to rapid failure of the cell. The pores in the interface can further induce the uneven deposition of lithium, accelerate the growth of lithium dendrites, and seriously affect the cycle life of the solid-state battery.

The conventional method is to pre-establish a buffer layer at the interface layer between the electrode and the electrolyte, but it is difficult to solve the problem that a large number of crack pores are formed inside the electrode due to the volume effect of the negative electrode during the cycle. Alternatively, a three-dimensional skeleton structure containing an active material is constructed for the negative electrode to buffer the volume change of the negative electrode, but this greatly reduces the energy density of the cell. Therefore, it is of great significance for the practical application of solid-state batteries to make them repair the mechanical damage of the interface and the inside of the electrode by themselves during the cell cycle.

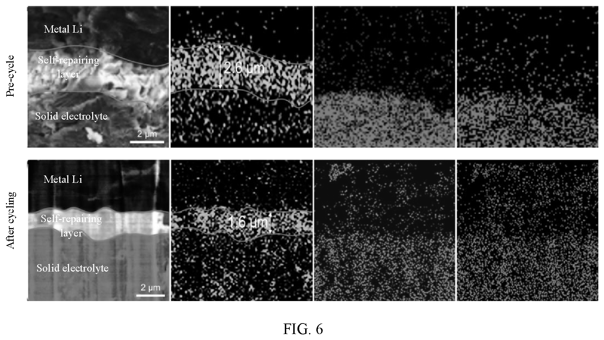

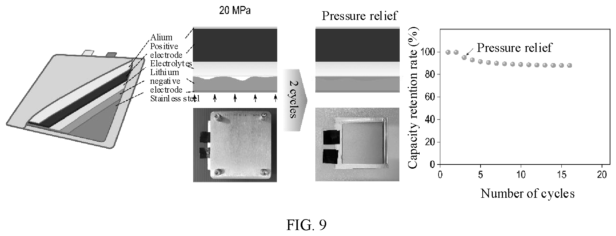

The prior art "Promoting favorable interfacial properties in lithium-based cells using chlorine-rich sulfide inorganic solid-state electrolytes" discloses a chlorine-rich sulfide solid-state electrolyte Li₇₋ₓPS₆₋ₓClₓ (x = 0.6 or 1.3). FIG. 9 of this prior art shows that after 200 h of cycling, a LiCl-rich interface gradually accumulates at the negative electrode interface of the cell, and the original electrolyte becomes loose and porous. It can be known by those skilled in the art from FIG. 9 of this prior art that during the cell cycling process, the movement speed of chloride ions is slow and they cannot return to the electrolyte, but can only gradually accumulate at the interface; therefore, this cannot adapt to the high volume effect of the negative electrode during one charging and discharging cycle of the cell. This prior art discloses that the cell of its FIG. 6 can only be cycled for 30 cycles at a low areal capacity (< 0.5 mAh cm⁻²) under high stacking pressure (6 MPa). In addition, the prior art indicates that the electrolyte thereof requires cold pressing into a sheet followed by annealing at 500°C for 12 h, and the preparation conditions are harsh.

CN 109728342 B discloses a polymer-based self-repairing method for a solid-state battery, which utilizes a composite of an inorganic solid-state electrolyte and a self-repairing polymer to realize the self-repairing function of the polymer for the solid-state battery. This patent solves the problem of solid-to-solid contact of key materials during the assembly of a solid-state battery. However, this method requires the addition of more than 50% polymer, and such a high polymer content compromises the ionic conductivity of the electrolyte. Moreover, it fails to effectively repair the pores and cracks inside the electrode during the cycling of the cell.

CN 112687971 A discloses a self-repairing functional interface layer for a solid-state battery, which uses a composite of a self-repairing polymer, an inorganic solid electrolyte, a lithium salt, and an ether, and utilizes intermolecular and intramolecular hydrogen bonds in the polymer to realize the self-repairing of the electrolyte part. However, this method cannot effectively repair the pores and cracks inside the electrode during the cell cycling process.

Accordingly, there is an urgent need to develop an electrochemically driven self-repairing technique to continuously repair the pore cracks formed in the cell interface layer or the inside of the electrode during the cycling of the solid-state battery.

### Description of the Invention

It is an object of the present invention to provide the use of a dual-ion conductor for improving the stability of the mechanical structure of an interface layer between a negative electrode and an electrolyte in a lithium-ion and sodium-ion energy storage device. The present invention enables in-situ self-repairing by forming a dynamic self-adaptive interface layer of lithium halide and sodium halide at the negative electrode-electrolyte interface by the migrating back and forth of halogen anions during cell cycling, maintaining good electrolyte-negative electrode interface contact, thereby improving the cycle life of solid-state batteries, and achieving stable cycling without additional stacking pressure.

The above object of the present invention is achieved by the following technical solution.

In the context of the present invention, the term "non-functional component" includes some components commonly used in the art, such as carbon materials as conductive additives, and polytetrafluoroethylene, polyvinylidene fluoride, sodium carboxymethyl cellulose, or styrene-butadiene rubber as binders.

In one aspect, the present invention provides a use of a dual-ion conductor compound in improving the stability of the mechanical structure of an interface layer between a negative electrode and an electrolyte in an energy storage device, wherein the energy storage device includes a lithium-ion energy storage device and a sodium-ion energy storage device, and includes a positive electrode, an electrolyte, and a negative electrode;
Wherein, during charging and discharging, a cation (such as a lithium cation or a sodium cation) and a halogen anion of the dual-ion conductor compound are capable of simultaneously migrating back and forth between the interface layer and the electrolyte under the driving of an electric field;
the dual-ion conductor compound is selected from one or more of alkali metal halides, alkaline earth metal halides, and halide-doped sulfides.

The inventors of the present application have surprisingly found that the stability of the mechanical structure of an interface layer between the negative electrode and the electrolyte in a lithium-ion energy storage device can be improved by the addition of the dual-ion conductor compound of the present invention to the energy storage device. Without wishing to be bound by theory, this may be attributed to the fact that the halogen anions of the dual-ion conductor compound migrate back and forth under the driving of an electric field, thereby forming a dynamic self-adaptive interface layer of a halide between the negative electrode and the electrolyte, naturally adjusting the morphology of the interface layer and self-adaptively repairing cracks and pores, generated by the negative electrode (such as a lithium metal negative electrode, or an alloy negative electrode of lithium metal and silicon, or an alloy negative electrode of lithium metal and tin) due to volume effects, to ensure an intimate solid-to-solid contact between the negative electrode and the solid electrolyte during stripping/electroplating.

Preferably, in the use according to the present invention, the alkali metal halide is a lithium halide and/or a sodium halide.

Preferably, in the use according to the present invention, the alkali metal halide is selected from one or more of LiI, LiBr, LiCl, LiF, NaI, NaBr, NaCl and NaF; more preferably, the alkali metal halide is selected from one or more of LiI, LiBr, NaI and NaBr; most preferably, the alkali metal halide is LiI and/or NaI.

Preferably, in the use according to the present invention, the alkaline earth metal halide is a magnesium halide.

Preferably, in the use according to the present invention, the alkaline earth metal halide is MgI₂ and/or MgBr₂; more preferably, the alkaline earth metal halide is MgI₂.

Preferably, in the use according to the present invention, the halide-doped sulfide is selected from one or more of Na₃₊ₓPS₄Brₓ, Li₃₋ₓPS₄₋ₓBrₓ, Li₃₊ₓPS₄Iₓ, Li₃₋ₓPS₄₋ₓIₓ, Li₆₊ₓP₂S₈Iₓ, and Li₆₊ₓP₂S₈Brₓ, wherein 0.1 ≤ x ≤ 2; more preferably, the halide-doped sulfide is Li₃₊ₓPS₄Iₓ and/or Li₆₊ₓP₂S₈Iₓ, wherein 0.1 ≤ x ≤ 2.

Preferably, in the use according to the present invention, the dual-ion conductor compound is a halide-doped sulfide, and the dual-ion conductor compound is an electrolyte or an interface layer between an electrolyte and a negative electrode, or is uniformly dispersed as an additive in a positive electrode, an electrolyte, or an interface layer between an electrolyte and a negative electrode.

Preferably, in the use according to the present invention, the dual-ion conductor compound is selected from one or more of alkali metal halides and alkaline earth metal halides, and the dual-ion conductor compound is uniformly dispersed as an additive in a positive electrode, an electrolyte, or an interface layer between an electrolyte and a negative electrode.

Preferably, in the use according to the present invention, the dual-ion conductor compound is used in combination with an additional non-functional component.

Preferably, in the use according to the present invention, the dual-ion conductor compound is selected from one or more of alkali metal halides and alkaline earth metal halides and, when the dual-ion conductor compound is uniformly dispersed as an additive in the positive electrode, the electrolyte, or the interface layer between the electrolyte and the negative electrode, the dual-ion conductor compound accounts for 0.1 wt% to 50 wt%, preferably 0.1 wt% to 30 wt% of the positive electrode, the electrolyte, or the interface layer between the electrolyte and the negative electrode.

Preferably, in the use according to the present invention, the dual-ion conductor compound is a halide-doped sulfide and when the dual-ion conductor compound is uniformly dispersed as an additive in the positive electrode, the electrolyte, or the interface layer between the electrolyte and the negative electrode, the dual-ion conductor compound accounts for 0.1 wt% to 50 wt% of the positive electrode, and accounts for 1 wt% or more and less than 100 wt% of the electrolyte or the interface layer between the electrolyte and the negative electrode.

Preferably, in the use according to the present invention, the halogen anion of the dual-ion conductor compound is capable of migrating back and forth under the driving of an electric field during charging and discharging, thereby forming a dynamic self-adaptive interface layer of a halide between the negative electrode and the electrolyte, naturally adjusting the morphology of the interface layer and self-adaptively repairing cracks and pores, generated by the negative electrode due to volume effects, to ensure an intimate solid-to-solid contact between the negative electrode and the solid electrolyte during stripping/electroplating.

In another aspect, the present invention provides a method for improving the stability of the mechanical structure of an interface layer between a negative electrode and an electrolyte in an energy storage device, wherein the energy storage device includes a lithium-ion energy storage device and a sodium-ion energy storage device, and includes a positive electrode, an electrolyte and a negative electrode, the method comprising the steps of:
disposing a dual-ion conductor compound as the electrolyte or as an interface layer between the electrolyte and the negative electrode, or uniformly dispersing the dual-ion conductor compound as an additive in the positive electrode, the electrolyte, or the interface layer between the electrolyte and the negative electrode;
wherein, during charging and discharging, a cation and a halogen anion of the dual-ion conductor compound are capable of simultaneously migrating back and forth between the interface layer and the electrolyte under the driving of an electric field;
when a dual-ion conductor compound is used as an electrolyte or an interface layer between an electrolyte and a negative electrode, the dual-ion conductor compound is a halide-doped sulfide;
when the dual-ion conductor compound is uniformly dispersed as an additive in a positive electrode, an electrolyte, or an interface layer between an electrolyte and a negative electrode, the dual-ion conductor compound is selected from one or more of an alkali metal halide, an alkaline earth metal halide, and a halide-doped sulfide.

Preferably, in the method according to the present invention, the alkali metal halide is a lithium halide and/or a sodium halide.

Preferably, in the method according to the present invention, the alkali metal halide is selected from one or more of LiI, LiBr, LiCl, LiF, NaI, NaBr, NaCl and NaF; more preferably, the alkali metal halide is selected from one or more of LiI, LiBr, NaI and NaBr; most preferably, the alkali metal halide is LiI and/or NaI.

Preferably, in the method according to the present invention, the alkaline earth metal halide is a magnesium halide.

Preferably, in the method according to the present invention, the alkaline earth metal halide is MgI₂ and/or MgBr₂; more preferably, the alkaline earth metal halide is MgI₂.

Preferably, in the method according to the present invention, the halide-doped sulfide is selected from one or more of Na₃₊ₓPS₄Brₓ, Li₃₋ₓPS₄₋ₓBrₓ, Li₃₊ₓPS₄Iₓ, Li₃₋ₓPS₄₋ₓIₓ, Li₆₊ₓP₂S₈Iₓ, and Li₆₊ₓP₂S₈Brₓ, wherein 0.1 ≤ x ≤ 2; more preferably, the halide-doped sulfide is Li₃₊ₓPS₄Iₓ and/or Li₆₊ₓP₂S₈Iₓ, wherein 0.1 ≤ x ≤ 2.

Preferably, in the method according to the present invention, the dual-ion conductor compound is used in combination with an additional non-functional component.

Preferably, in the method of the present invention, when the dual-ion conductor compound is uniformly dispersed as an additive in the positive electrode, the electrolyte, or the interface layer between the electrolyte and the negative electrode, the dual-ion conductor compound is selected from one or more of alkali metal halides and alkaline earth metal halides and the dual-ion conductor compound accounts for 0.1 wt% to 50 wt%, preferably 0.1 wt% to 30 wt% of the positive electrode, the electrolyte, or the interface layer between the electrolyte and the negative electrode.

Preferably, in the method of the present invention, when the dual-ion conductor compound is uniformly dispersed as an additive in the positive electrode, the electrolyte, or the interface layer between the electrolyte and the negative electrode, the dual-ion conductor compound is a halide-doped sulfide, and the dual-ion conductor compound accounts for 0.1 wt% to 50 wt% of the positive electrode, and accounts for 1 wt% or more and less than 100 wt% of the electrolyte, or the interface layer between the electrolyte and the negative electrode.

Preferably, in the method of the present invention, the halogen anion of the dual-ion conductor compound is capable of migrating back and forth under the driving of an electric field during charging and discharging, thereby forming a dynamic self-adaptive interface layer of a halide between the negative electrode and the electrolyte, naturally adjusting the morphology of the interface layer and self-adaptively repairing cracks and pores, generated by the negative electrode due to volume effects, to ensure an intimate solid-to-solid contact between the negative electrode and the solid electrolyte during stripping/electroplating.

In yet another aspect, the present invention provides a dual-ion conductor compound for improving the stability of the mechanical structure of an interface layer between a negative electrode and an electrolyte in an energy storage device, wherein the energy storage device includes a lithium-ion energy storage device and a sodium-ion energy storage device and includes a positive electrode, an electrolyte, and a negative electrode;
wherein, during charging and discharging, a cation and a halogen anion of the dual-ion conductor compound are capable of simultaneously migrating back and forth between the interface layer and the electrolyte under the driving of an electric field;
the dual-ion conductor compound is selected from one or more of alkali metal halides, alkaline earth metal halides, and halide-doped sulfides.

Preferably, in the dual-ion conductor compound of the present invention, the alkali metal halide is a lithium halide and/or a sodium halide.

Preferably, in the dual-ion conductor compound of the present invention, the alkali metal halide is selected from one or more of LiI, LiBr, LiCl, LiF, NaI, NaBr, NaCl, and NaF; more preferably, the alkali metal halide is selected from one or more of LiI, LiBr, NaI, and NaBr; most preferably, the alkali metal halide is LiI and/or NaI.

Preferably, in the dual-ion conductor compound of the present invention, the alkaline earth metal halide is a magnesium halide.

Preferably, in the dual-ion conductor compound of the present invention, the alkaline earth metal halide is MgI₂ and/or MgBr₂; more preferably, the alkaline earth metal halide is MgI₂.

Preferably, in the dual-ion conductor compound of the present invention, the halide-doped sulfide is selected from one or more of Na₃₊ₓPS₄Brₓ, Li₃₋ₓPS₄₋ₓBrₓ, Li₃₊ₓPS₄Iₓ, Li₃₋ₓPS₄₋ₓIₓ, Li₆₊ₓP₂S₈Iₓ, and Li₆₊ₓP₂S₈Brₓ, wherein 0.1 ≤ x ≤ 2; more preferably, the halide-doped sulfide is Li₃₊ₓPS₄Iₓ and/or Li₆₊ₓP₂S₈Iₓ, wherein 0.1 ≤ x ≤ 2.

Preferably, in the dual-ion conductor compound of the present invention, the dual-ion conductor compound is a halide-doped sulfide, and the dual-ion conductor compound is an electrolyte or an interface layer between an electrolyte and a negative electrode, or is uniformly dispersed as an additive in a positive electrode, an electrolyte, or an interface layer between an electrolyte and a negative electrode.

Preferably, in the dual-ion conductor compound of the present invention, the dual-ion conductor compound is selected from one or more of an alkali metal halide and an alkaline earth metal halide, and the dual-ion conductor compound is uniformly dispersed as an additive in a positive electrode, an electrolyte, or an interface layer between an electrolyte and a negative electrode.

Preferably, in the dual-ion conductor compound of the present invention, the dual-ion conductor compound is used in combination with an additional non-functional component.

Preferably, in the dual-ion conductor compound of the present invention, the dual-ion conductor compound is selected from one or more of alkali metal halides and alkaline earth metal halides and, when the dual-ion conductor compound is uniformly dispersed as an additive in the positive electrode, the electrolyte, or the interface layer between the electrolyte and the negative electrode, the dual-ion conductor compound accounts for 0.1 wt% to 50 wt%, preferably 0.1 wt% to 30 wt% of the positive electrode, the electrolyte, or the interface layer between the electrolyte and the negative electrode.

Preferably, in the dual-ion conductor compound of the present invention, the dual-ion conductor compound is a halide-doped sulfide and, when the dual-ion conductor compound is uniformly dispersed as an additive in a positive electrode, an electrolyte, or an interface layer between the electrolyte and the negative electrode, the dual-ion conductor compound accounts for 0.1 wt% to 50 wt% of the positive electrode, and accounts for 1 wt% or more and less than 100 wt% of the electrolyte or the interface layer between the electrolyte and the negative electrode.

Preferably, in the dual-ion conductor compound of the present invention, a halogen anion of the dual-ion conductor compound is capable of migrating back and forth under the driving of an electric field during charging and discharging, thereby forming a dynamic self-adaptive interface layer of a halide between the negative electrode and the electrolyte, naturally adjusting the morphology of the interface layer and self-adaptively repairing cracks and pores, generated by the negative electrode due to volume effects, to ensure an intimate solid-to-solid contact between the negative electrode and the solid electrolyte during stripping/electroplating.

In a specific embodiment of the present invention, the dual-ion conductor compounds of the present invention can be adapted for use in solid-state batteries of currently common polymer, chloride, and sulfide electrolyte systems. Through the movement of halogen anions and the formation of a dense interface layer between the negative electrode and the electrolyte during the cycling of the cell, the in-situ self-repairing of the interface layer can be achieved, and the good contact between the electrolyte and the negative electrode interface can be maintained, which can effectively alleviate the problems of non-uniform interface and loss of electrical contact caused by the large volume effect of high specific capacity negative electrodes. For the lithium metal negative electrode, the interface layer formed by self-repair can also inhibit the dendrite growth of the lithium metal negative electrode and improve the cycle life of the solid-state batteries.

In a specific embodiment of the present invention, the dual-ion conductor compound may be used in combination with other commonly used solid electrolytes, for example, by the following method:
100 mL of acetonitrile is added to the stirring tank, and the polymer electrolyte, lithium salt, and dual-ion conductor are homogeneously mixed in a mortar to form a mixture. 3 g of the mixture is weighed into the stirring tank to form the blend components, which are stirred to obtain a slurry. The slurry is uniformly coated on the PTFE template, and then the PTFE template coated with the slurry is placed in a 55°C oven to dry for 6 h. After the temperature is lowered to room temperature, the dried electrolyte membrane is punched into a circular disk having a diameter of 16 mm, and the circular disk is rapidly transferred to a glove box filled with argon gas for storage, to obtain a polymer electrolyte sheet containing a self-repairing additive.

In a specific embodiment of the present invention, an inorganic electrolyte having a self-repairing function can be obtained after thoroughly mixing and homogenizing a dual-ion conductor compound with a sulfide electrolyte or a chloride electrolyte by hand grinding or ball milling.

In a particular embodiment of the present invention, the dual-ion conductor compound may be dispersed in the positive electrode in a uniform manner. Specifically, the dual-ion conductor compound may be applied to a positive electrode by compounding it with PVDF as a binder, or by compounding it with a C-containing material as a conductive agent. Further, it can be carried out, for example, by a method comprising the steps of:
the dual-ion conductor compound is added to the PVDF dispersion and stirred well to completely dissolve the dual-ion conductor compound to obtain a solution. After the water in the solution is completely removed by freeze-drying, the water-removed product is transferred to a vacuum oven and kept at 120°C for 6 h. After the temperature has dropped to room temperature, the composite self-repairing additive is quickly transferred into an argon-filled glove box for storage, thereby obtaining a binder with a self-repairing function. Thereafter, a binder having a self-repairing function is applied to the positive electrode.

Alternatively, the conductive agent precursor is mixed with the dual-ion conductor compound to obtain a mixture. The mixture is placed in a tube furnace and subjected to high-temperature firing at 700°C under an argon atmosphere for 6 h to obtain a conductive agent having a self-repairing function. Thereafter, a conductive agent having a self-repairing function is applied to the positive electrode. Preferably, the conductive agent precursor may be selected from at least one of a conductive polymer monomer, saccharides, asphalt, coke, alkane gas, and alkene gas. More preferably, the conductive agent precursor is at least one selected from the group consisting of aniline monomer, sucrose, glucose, paraffin oil, methane, acetylene, and ethylene.

Further, in the self-repairing additive in which the dual-ion conductor compound is compounded with a binder or a conductive agent according to the present invention, the mass fraction of the dual-ion conductor compound is more than 50%, preferably more than 80%.

The present invention has the following beneficial effects:
the dual-ion conductor compound provided by the present invention can be applied to solid-state batteries of currently common polymer, chloride, or sulfide electrolyte systems. During cell cycling, the halogen anions of the dual-ion conductor migrate back and forth under the driving of an electric field to form a dynamic self-adaptive interface layer of a halide between the negative electrode and the electrolyte, naturally adjusting the morphology of the interface layer and self-adaptively repairing the cracks and pores, generated by the negative electrode due to volume effects, to ensure an intimate solid-to-solid contact between the negative electrode and the solid electrolyte during stripping/electroplating. At the same time, the interface layer formed by self-repairing can inhibit the dendrite growth of the lithium metal negative electrode, improve the cycle life of the solid-state battery, and realize stable cycling at zero stacking pressure.

### Brief Description of the Drawings

Hereinafter, embodiments of the present invention will be described in detail with reference to the accompanying drawings, in which:
FIG. 1A is an initial impedance spectrum and an impedance spectrum after 50 cycles of a d1 cell prepared according to an example of the present invention;
FIG. 1B is an initial impedance spectrum and an impedance spectrum after 50 cycles of an f1 cell prepared according to a comparative example of the present invention;
FIG. 2 is a cross-sectional electron micrograph of an interface layer between a negative electrode and an electrolyte after 50 cycles of an f1 cell prepared according to a comparative example of the present invention;
FIG. 3 is a cross-sectional electron micrograph of an interface layer between a negative electrode and an electrolyte after 50 cycles of a d1 cell prepared according to an example of the present invention;
FIG. 4 is an electron micrograph and a corresponding energy dispersive X-ray spectrum of LiI particles in an electrolyte in an initial state and after 50 cycles of a d7 cell prepared according to an example of the present invention;
FIG. 5 is a cross-sectional electron micrograph of an interface layer between a negative electrode and an electrolyte after 50 cycles of a d7 cell prepared according to an example of the present invention;
FIG. 6 is a cross-sectional electron micrograph and an energy-dispersive X-ray spectrum of an interface layer between a negative electrode and an electrolyte after the first discharge and first charge of a d1 solid-state battery prepared according to an example of the present invention;
FIG. 7 is an in-situ X-ray photoelectron spectrum of an interface layer between a negative electrode and an electrolyte of a d1 cell prepared according to an example of the present invention;
FIG. 8 shows charge-discharge cycle capacity retention and Coulombic efficiency of a d1 solid-state battery prepared according to an example of the present invention;
FIG. 9 shows a pouch cell prepared according to the d1 cell scheme, according to an example of the present invention, and its cycling capacity retention without stacking pressure;
FIG. 10 is a comparison of cycle data for a d10 cell prepared according to an example of the present invention and an f7 cell prepared according to a comparative example;
FIG. 11 is a large-area cross-sectional electron micrograph of an interface layer between a negative electrode and an electrolyte after 50 cycles of a d5 cell prepared according to an example of the present invention;
FIG. 12 is a cross-sectional electron micrograph and an energy-dispersive X-ray spectrum of an interface layer between a negative electrode and an electrolyte after 50 cycles of a d5 cell prepared according to an example of the present invention.

### Detailed Description of the Invention

The present invention will now be described in further detail with reference to specific embodiments thereof, which are given for the purpose of illustration only, and are not intended to limit the scope of the present invention.

### Example 1

In this example, NaI, LiBr, LiCl, Li_{2.8}PS_{3.8}Br_{0.2}, Li₇P₂S₈I, Li_{1.4}PS_{2.4}Br_{1.6}, or MgI₂ was used as a dual-ion conductor. These dual-ion conductors were uniformly dispersed in a Li₇P₃S₁₁ or PEO solid electrolyte by grinding, and LiNi_{0.8}Co_{0.1}Mn_{0.1}O₂ was used as a positive electrode active material, and silicon or metallic Li was used as a negative electrode to assemble a solid-state battery.
1. Li₇P₃S₁₁ and NaI were uniformly mixed at a mass ratio of 19:1 in a mortar to obtain a blend component. 150 mg of the blend component was weighed, and the weighed blend component was placed in a ceramic sleeve having a diameter of 10 mm. The blend component placed in the ceramic sleeve was maintained under a pressure of 360 MPa for 10 min to obtain an electrolyte sheet containing a self-repairing additive. LiNi_{0.8}Co_{0.1}Mn_{0.1}O₂, Li₇P₃S₁₁, and Super-P were uniformly mixed at a mass ratio of 5:4:1 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disk having a diameter of 9 mm and placed on the other side of the electrolyte sheet, and the electrolyte sheet with the lithium foil was maintained under a pressure of 120 MPa for 5 min to obtain a cell. The obtained cell was denoted as a1.
2. Li₇P₃S₁₁ and LiBr were uniformly mixed at a mass ratio of 19:1 in a mortar to obtain a blend component. 150 mg of the blend component was weighed, and the weighed blend component was placed in a ceramic sleeve having a diameter of 10 mm. The blend component placed in the ceramic sleeve was maintained under a pressure of 360 MPa for 10 min to obtain an electrolyte sheet containing a self-repairing additive. LiNi_{0.8}Co_{0.1}Mn_{0.1}O₂, Li₇P₃S₁₁, and Super-P were uniformly mixed at a mass ratio of 5:4:1 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disk having a diameter of 9 mm and placed on the other side of the electrolyte sheet, and the electrolyte sheet with the lithium foil was maintained under a pressure of 120 MPa for 5 min to obtain a cell. The obtained cell was denoted as a2.
3. Li₇P₃S₁₁ and LiCl were uniformly mixed at a mass ratio of 19:1 in a mortar to obtain a blend component. 150 mg of the blend component was weighed, and the weighed blend component was placed in a ceramic sleeve having a diameter of 10 mm. The blend component placed in the ceramic sleeve was maintained under a pressure of 360 MPa for 10 min to obtain an electrolyte sheet containing a self-repairing additive. LiNi_{0.8}Co_{0.1}Mn_{0.1}O₂, Li₇P₃S₁₁, and Super-P were uniformly mixed at a mass ratio of 5:4:1 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disk having a diameter of 9 mm and placed on the other side of the electrolyte sheet, and the electrolyte sheet with the lithium foil was maintained under a pressure of 120 MPa for 5 min to obtain a cell. The obtained cell was denoted as a3.
4. Li₇P₃S₁₁, Li_{2.8}PS_{3.8}Br_{0.2}, and Li₇P₂S₈I were uniformly mixed at a mass ratio of 19:0.5:0.5 in a mortar to obtain a blend component. 150 mg of the blend component was weighed, and the weighed blend component was placed in a ceramic sleeve having a diameter of 10 mm. The blend component placed in the ceramic sleeve was maintained under a pressure of 360 MPa for 10 min to obtain an electrolyte sheet containing a self-repairing additive. LiNi_{0.8}Co_{0.1}Mn_{0.1}O₂, Li₇P₃S₁₁, and Super-P were uniformly mixed at a mass ratio of 5:4:1 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disk having a diameter of 9 mm and placed on the other side of the electrolyte sheet, and the electrolyte sheet with the lithium foil was maintained under a pressure of 120 MPa for 5 min to obtain a cell. The obtained cell was denoted as a4.
5. 100 mL of acetonitrile was added to the stirring tank, and the PEO, LiTFSI, and NaI were uniformly mixed at a mass ratio of 30:10:1 in a mortar to form a mixture. 3 g of the mixture was weighed into the stirring tank to form the blend components. The blend components were stirred to obtain a slurry. The slurry was uniformly coated on the PTFE template, and then the PTFE template coated with the slurry was placed in a 55°C oven to dry for 6 h. After the temperature was lowered to room temperature, the dried electrolyte membrane was punched into a circular disk having a diameter of 16 mm, and the circular disk was quickly transferred to a glove box filled with argon gas for storage. The LiNi_{0.8}Co_{0.1}Mn_{0.1}O₂ pole piece was used as the positive electrode, and the metal Li was used as the negative electrode, and the obtained cell was denoted as a5.
6. Li₇P₃S₁₁ and Li_{1.4}PS_{2.4}Br_{1.6} were uniformly mixed at a mass ratio of 19:1 in a mortar to obtain a blend component. 150 mg of the blend component was weighed, and the weighed blend component was placed in a ceramic sleeve having a diameter of 10 mm. The blend component placed in the ceramic sleeve was maintained under a pressure of 360 MPa for 10 min to obtain an electrolyte sheet containing a self-repairing additive. LiNi_{0.8}Co_{0.1}Mn_{0.1}O₂, Li₇P₃S₁₁, and Super-P were uniformly mixed at a mass ratio of 5:4:1 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a Si pole piece was placed on the other side of the electrolyte sheet, and the electrolyte sheet with the Si pole piece was maintained under a pressure of 360 MPa for 5 min to obtain a cell. The obtained cell was denoted as a6.
7. Li₇P₃S₁₁ and MgI₂ were uniformly mixed at a mass ratio of 19:1 in a mortar to obtain a blend component. 150 mg of the blend component was weighed, and the weighed blend component was placed in a ceramic sleeve having a diameter of 10 mm. The blend component placed in the ceramic sleeve was maintained under a pressure of 360 MPa for 10 min to obtain an electrolyte sheet containing a self-repairing additive. LiNi_{0.8}Co_{0.1}Mn_{0.1}O₂, Li₇P₃S₁₁, and Super-P were uniformly mixed at a mass ratio of 5:4:1 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disk having a diameter of 9 mm and placed on the other side of the electrolyte sheet, and the electrolyte sheet with the lithium foil was maintained under a pressure of 120 MPa for 5 min to obtain a cell. The obtained cell was denoted as a7.

**Table 1**

| Cell No. | Dual -ion conductor | cell impedance after 50 cycles (Ω) | Increase in impedance compared to the initial state | SEM morphology to observe whether there was a gap at the interface |
|---|---|---|---|---|
| a1 | NaI | 85 | 1.29 | No |
| a2 | LiBr | 90 | 1.43 | No |
| a3 | LiCl | 116 | 1.58 | No |
| a4 | Li_{2.8}PS_{3.8}Br_{0.2} and Li₇P₂S₈I | 102 | 1.46 | No |
| a5 | NaI | 66 | 2.13 | No |
| a6 | Li_{1.4}PS_{2.4}Br_{1.6} | 143 | 1.67 | No |
| a7 | MgI₂ | 187 | 2.3 | No |

### Example 2

In this example, LiBr was used as the dual-ion conductor. A mixture obtained by mixing a dual-ion conductor and a non-ionic conductor, such as PVDF or carbon, was used as a self-repairing additive, or a composite structure obtained by microstructurally compositing a dual-ion conductor and a non-ionic conductor, such as PVDF or carbon, was used as a self-repairing additive, and the self-repairing additive was uniformly dispersed in a Li₄Ti₅O₁₂ positive electrode to obtain a composite positive electrode. The assembly of a solid-state battery was performed by using Li₇P₃S₁₁ as a solid electrolyte and metallic Li as a negative electrode.
1. 5 g of PVDF dispersion with a mass fraction of 40% was weighed, and the weighed dispersion was added to a beaker. 3 g of LiBr was added to the dispersion and stirred well to completely dissolve the LiBr to obtain a solution. After the water in the solution was completely removed by freeze-drying, the water-removed product was transferred to a vacuum oven and kept at 120°C for 6 h. After the temperature dropped to room temperature, the composite self-repairing additive was quickly transferred to an argon-filled glove box for storage. 150 mg of Li₇P₃S₁₁ solid electrolyte was weighed and placed in a ceramic sleeve with a diameter of 10 mm. The solid electrolyte placed in the ceramic sleeve was maintained under a pressure of 360 MPa for 10 min to obtain an electrolyte sheet. Li₄Ti₅O₁₂, Li₇P₃S₁₁, Super-P, and a composite self-repairing additive LiBr-PVDF at a mass ratio of 4.5:4:1:0.5 were mixed uniformly in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disk having a diameter of 9 mm and placed on the other side of the electrolyte sheet, and the electrolyte sheet with the lithium foil was maintained under a pressure of 120 MPa for 5 min to obtain a cell. The obtained cell was denoted as c1.
2. 2.5 g of PVDF dispersion with a mass fraction of 40% was weighed, and the weighed dispersion was added to a beaker. 4 g of LiBr was added to the dispersion and stirred well to completely dissolve the LiBr to obtain a solution. After the water in the solution was completely removed by freeze-drying, the water-removed product was transferred to a vacuum oven and kept at 120°C for 6 h. After the temperature dropped to room temperature, the composite self-repairing additive was quickly transferred to an argon-filled glove box for storage. 150 mg of Li₇P₃S₁₁ solid electrolyte was weighed and placed in a ceramic sleeve with a diameter of 10 mm. The solid electrolyte placed in the ceramic sleeve was maintained under a pressure of 360 MPa for 10 min to obtain an electrolyte sheet. Li₄Ti₅O₁₂, Li₇P₃S₁₁, Super-P, and a composite self-repairing additive LiBr-PVDF at a mass ratio of 4.5:4:1:0.5 were mixed uniformly in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disk having a diameter of 9 mm and placed on the other side of the electrolyte sheet, and the electrolyte sheet with the lithium foil was maintained under a pressure of 120 MPa for 5 min to obtain a cell. The obtained cell was denoted as c2.
3. After mixing 5 g of C₆H₁₂O₆ and 3 g of LiBr, the mixture was placed in a tube furnace and subjected to high-temperature firing at 700°C for 6 h under argon gas to obtain a carbon-coated self-repairing additive LiBr@C. 150 mg of Li₇P₃S₁₁ solid electrolyte was weighed and placed in a ceramic sleeve with a diameter of 10 mm. The solid electrolyte placed in the ceramic sleeve was maintained under a pressure of 360 MPa for 10 min to obtain an electrolyte sheet. Li₄Ti₅O₁₂, Li₇P₃S₁₁, and the composite self-repairing additive LiBr@C were mixed uniformly at a mass ratio of 5:4:1 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disk having a diameter of 9 mm and placed on the other side of the electrolyte sheet, and the electrolyte sheet with the lithium foil was maintained under a pressure of 120 MPa for 5 min to obtain a cell. The obtained cell was denoted as c3.
4. After mixing 2.5g of C₆H₁₂O₆ and 4g of LiBr, the mixture was placed in a tube furnace and subjected to high-temperature firing at 700°C for 6 h under argon gas to obtain a carbon-coated self-repairing additive LiBr@C. 150 mg of Li₇P₃S₁₁ solid electrolyte was weighed and placed in a ceramic sleeve with a diameter of 10 mm. The solid electrolyte placed in the ceramic sleeve was maintained under a pressure of 360 MPa for 10 min to obtain an electrolyte sheet. Li₄Ti₅O₁₂, Li₇P₃S₁₁, and the composite self-repairing additive LiBr@C were mixed uniformly at a mass ratio of 5:4:1 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disk having a diameter of 9 mm and placed on the other side of the electrolyte sheet, and the electrolyte sheet with the lithium foil was maintained under a pressure of 120 MPa for 5 min to obtain a cell. The obtained cell was denoted as c4.

**Table 2**

| Cell No. | Non-ionic conductor and its mass ratio | cell impedance after 50 cycles (Ω) | Increase in impedance compared to the initial state | SEM morphology to observe whether there was a gap at the interface |
|---|---|---|---|---|
| c1 | PVDF 40% | 168 | 2.58 | No |
| c2 | PVDF 20% | 98 | 1.4 | No |
| c3 | C 40% | 159 | 2.48 | No |
| c4 | C 20% | 102 | 1.5 | No |

### Example 3

In this example, Li₆₊ₓP₂S₈Brₓ, Li₃₊ₓPS₄Iₓ, Li₆₊ₓP₂S₈Iₓ, Li₃₋ₓPS₄₋ₓIₓ, or LiI was used as the dual-ion conductor compound. The assembly of the solid-state battery was performed by using Li₆₊ₓP₂S₈Brₓ, Li₃₊ₓPS₄Iₓ, Li₆₊ₓP₂S₈Iₓ, Li₃₋ₓPS₄₋ₓIₓ, or LiI as the electrolyte or negative electrode interface layer, or uniformly dispersed in the Li₄Ti₅O₁₂ positive electrode, Li₃PS₄, or PEO solid electrolyte by ball milling, with metallic Li as the negative electrode.
1. 150 mg of Li_{3.2}PS₄I_{0.2} was weighed and placed in a ceramic sleeve having a diameter of 10 mm, and the Li_{3.2}PS₄I_{0.2} placed in the ceramic sleeve was maintained under a pressure of 360 MPa for 10 min to obtain an electrolyte sheet. Li₄Ti₅O₁₂, Li₃PS₄, and Super-P were mixed uniformly at a mass ratio of 5:4:1 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disk having a diameter of 9 mm and placed on the other side of the electrolyte sheet, and the electrolyte sheet with the lithium foil was maintained under a pressure of 120 MPa for 5 min to obtain a cell. The obtained cell was denoted as d1.
2. The solid-state battery was prepared according to the scheme of the cell d1, and differs from d1 in that the dual-ion conductor was different. In the present example, Li₄PS₄I was selected as the dual-ion conductor. The cell obtained in this example was denoted as d2.
3. The solid-state battery was prepared according to the scheme of the cell d1, and differs from d1 in that the dual-ion conductor was different. In the present example, Li_{4.6}PS₄I_{1.6} was selected as the dual-ion conductor. The cell obtained in this example was denoted as d3.
4. The solid-state battery was prepared according to the scheme of the cell d1, and differs from d1 in that the dual-ion conductor was different. In the present example, Li_{2.8}PS_{3.8}I_{0.2} was selected as the dual-ion conductor. The cell obtained in this example was denoted as d4.
5. 150 mg of Li₃PS₄ solid electrolyte was weighed and placed in a ceramic sleeve having a diameter of 10 mm. The Li₃PS₄ placed in the ceramic sleeve was maintained under a pressure of 360 MPa for 10 min to obtain a Li₃PS₄ electrolyte sheet. Li₄Ti₅O₁₂, Li₃PS₄, and Super-P were mixed uniformly at a mass ratio of 5:4:1 in a mortar to obtain a mixture, and the mixture was used as a composite positive electrode. 5 mg of the mixture was weighed, and the weighed mixture was placed on one side of the aforementioned Li₃PS₄ electrolyte sheet. The electrolyte sheet with the mixture was maintained under a pressure of 360 MPa for 10 min to form a composite structure of the Li₃PS₄ electrolyte sheet/composite positive electrode. A metal lithium foil having a thickness of 100 µm and elemental iodine were placed in a sealed container and heated to 120°C for 5 h to form a composite structure of a LiI interface layer/Li negative electrode. The LiI interface layer/Li negative electrode was cut into a circular disc having a diameter of 9 mm and placed on the other side of the electrolyte sheet to form a composite structure of the Li₃PS₄ electrolyte sheet/LiI interface layer/Li negative electrode, and the electrolyte sheet with the lithium foil was maintained under a pressure of 120 MPa for 5 min to obtain a cell. The obtained cell was denoted as d5.
6. 150 mg of Li₃PS₄ solid electrolyte was weighed and placed in a ceramic sleeve having a diameter of 10 mm, and the Li₃PS₄ placed in the ceramic sleeve was maintained under a pressure of 360 MPa for 10 min to obtain an electrolyte sheet. Li₄Ti₅O₁₂, Li₃PS₄, Super-P, and a self-repairing additive Li_{7.6}P₂S₈Br_{1.6} were mixed uniformly at a mass ratio of 4.5:4:1:0.5 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disk having a diameter of 9 mm and placed on the other side of the electrolyte sheet, and the electrolyte sheet with the lithium foil was maintained under a pressure of 120 MPa for 5 min to obtain a cell. The obtained cell was denoted as d6.
7. Li₆PS₅Cl and LiI were uniformly mixed at a mass ratio of 19:1 in a mortar to obtain a blend component. 150 mg of the blend component was weighed, and the weighed blend component was placed in a ceramic sleeve having a diameter of 10 mm. The blend component placed in the ceramic sleeve was maintained under a pressure of 360 MPa for 10 min to obtain an electrolyte sheet containing a self-repairing additive. Li₄Ti₅O₁₂, Li₆PS₅Cl, and Super-P were mixed uniformly at a mass ratio of 5:4:1 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disk having a diameter of 9 mm and placed on the other side of the electrolyte sheet, and the electrolyte sheet with the lithium foil was maintained under a pressure of 120 MPa for 5 min to obtain a cell. The obtained cell was denoted as d7.
8. 100 mL of acetonitrile was added to the stirring tank, and PEO, LiTFSI, and Li₇P₂S₈I were uniformly mixed at a mass ratio of 30:10:3 in a mortar to form a mixture. 3 g of the mixture was weighed into the stirring tank to form a blend component, and the blend component was stirred to obtain a slurry. The slurry was uniformly coated on the PTFE template, and then the PTFE template coated with the slurry was placed in a 55°C oven for drying for 6 h. After the temperature was lowered to room temperature, the dried electrolyte membrane was punched into a circular disk having a diameter of 16 mm, and the circular disk was quickly transferred to a glove box filled with argon gas for storage. A Li₄Ti₅O₁₂ pole piece was used as the positive electrode, and metallic Li was used as the negative electrode; the obtained cell was denoted as d8.
9. 150 mg of Li₇P₂S₈Br solid electrolyte was weighed and placed in a ceramic sleeve having a diameter of 10 mm. The Li₇P₂S₈Br placed in the ceramic sleeve was maintained under a pressure of 360 MPa for 10 min to obtain a Li₇P₂S₈Br electrolyte sheet. Li₄Ti₅O₁₂, Li₇P₂S₈Br, and Super-P were uniformly mixed at a mass ratio of 5:4:1 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. A metal lithium foil having a thickness of 100 µm and elemental iodine were placed in a sealed container and heated to 120°C for 5 h to form a composite structure of a LiI interface layer/Li negative electrode. The LiI interface layer/Li negative electrode was cut into a circular disk having a diameter of 9 mm and placed on the other side of the electrolyte sheet to form a composite structure of Li₇P₂S₈Br electrolyte sheet/LiI interface layer/Li negative electrode, and the electrolyte sheet with the lithium foil was maintained under a pressure of 120 MPa for 5 min to obtain a cell. The obtained cell was denoted as d9.
10. 150 mg of Li_{3.2}PS₄I_{0.2} solid electrolyte was weighed and placed in a ceramic sleeve having a diameter of 10 mm. The Li_{3.2}PS₄I_{0.2} placed in the ceramic sleeve was maintained under a pressure of 360 MPa for 10 min to obtain a Li_{3.2}PS₄I_{0.2} electrolyte sheet. A metallic lithium foil having a thickness of 100 µm was cut into two circular disks, each having a diameter of 9 mm, and placed on both sides of the electrolyte sheet to form a composite structure of Li/Li_{3.2}PS₄I_{0.2}/Li, and the electrolyte sheet with the lithium foil was maintained under a pressure of 20 MPa for 5 min to obtain a cell. The obtained cell was denoted as d10.

**Table 3**

| Cell No. | Application mode of the self-repairing additive | cell impedance after 50 cycles (Ω) | Increase in impedance compared to the initial state | SEM morphology to observe whether there was a gap at the interface |
|---|---|---|---|---|
| d1 | As an electrolyte layer | 93 | 1.39 | No |
| d2 | As an electrolyte layer | 113 | 1.48 | No |
| d3 | As an electrolyte layer | 136 | 1.56 | No |
| d4 | As an electrolyte layer | 102 | 1.34 | No |
| d5 | As the negative electrode interface layer | 73 | 1.25 | No |
| d6 | Dispersed in the positive electrode | 91 | 1.30 | No |
| d7 | Dispersed in the sulfide electrolyte | 90 | 1.38 | No |
| d8 | Dispersed in the PEO electrolyte | 67 | 2.03 | No |
| d9 | As the electrolyte layer and the interface layer | 126 | 1.28 | No |
| d10 | As an electrolyte layer | 65 | 1.30 | No |

### Example 4

In this example, Na₃₊ₓPS₄Brₓ or LiBr was used as a dual-ion conductor, which was uniformly dispersed in Li₃PS₄, Li₇P₃S₁₁, or Na₃PS₄ solid electrolyte by grinding, ball milling, or liquid-phase compounding; Li₄Ti₅O₁₂ or NaFePO₄ was used as the positive electrode active material, and metallic Li or Na was used as the negative electrode to assemble a solid-state battery.
1. Na₃PS₄ and Na_{3.2}PS₄Br_{0.2} were uniformly mixed at a mass ratio of 19:1 in a mortar to obtain a blend component. 150 mg of the blend component was weighed, and the weighed blend component was placed in a ceramic sleeve having a diameter of 10 mm. The blend component placed in the ceramic sleeve was maintained under a pressure of 360 MPa for 10 min to obtain an electrolyte sheet containing a self-repairing additive. NaFePO₄, Na₃PS₄, and Super-P were uniformly mixed at a mass ratio of 5:4:1 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min; then, a metallic Na foil with a thickness of 100 µm was cut into a circular disk with a diameter of 9 mm and placed on the other side of the electrolyte sheet, and the electrolyte sheet with the Na foil was maintained under a pressure of 120 MPa for 5 min to obtain a cell. The obtained cell was denoted as e1.
2. The solid-state battery was prepared according to the scheme of the cell e1, and differs from e1 in that the dual-ion conductor was different. In the present example, Na₄PS₄Br was selected as the dual-ion conductor. The cell obtained in this example was denoted as e2.
3. The solid-state battery was prepared according to the scheme of the cell e1, and differs from e1 in that the dual-ion conductor was different. In the present example, Na_{4.6}PS₄Br_{1.6} was selected as the dual-ion conductor. The cell obtained in this example was denoted as e3.
4. Li₇P₃S₁₁ and LiBr were ball milled at a mass ratio of 19:1 at a rotation speed of 400 rpm for 36 h to obtain a blend component. 150 mg of the blend component was weighed, and the weighed blend component was placed in a ceramic sleeve having a diameter of 10 mm. The blend component placed in the ceramic sleeve was maintained under a pressure of 360 MPa for 10 min to obtain an electrolyte sheet containing a self-repairing additive. Li₄Ti₅O₁₂, Li₇P₃S₁₁, and Super-P were uniformly mixed at a mass ratio of 5:4:1 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disk having a diameter of 9 mm and placed on the other side of the electrolyte sheet, and the electrolyte sheet with the lithium foil was maintained under a pressure of 120 MPa for 5 min to obtain a cell. The obtained cell was denoted as e4.
5. 3.8 g of Li₇P₃S₁₁ and 0.2 g of LiBr were added to 10 ml of ethanol, and the mixture was sufficiently stirred and ultrasonicated to completely dissolve LiBr and uniformly disperse Li₇P₃S₁₁ to obtain a solution. The solution was oven-dried under vacuum at 120°C for 6 h to obtain a powder. 150 mg of the powder was weighed, and the weighed powder was placed in a ceramic sleeve having a diameter of 10 mm. The powder placed in the ceramic sleeve was maintained under a pressure of 360 MPa for 10 min to obtain an electrolyte sheet containing a self-repairing additive. Li₄Ti₅O₁₂, Li₇P₃S₁₁, and Super-P were uniformly mixed at a mass ratio of 5:4:1 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disk having a diameter of 9 mm and placed on the other side of the electrolyte sheet, and the electrolyte sheet with the lithium foil was maintained under a pressure of 120 MPa for 5 min to obtain a cell. The obtained cell was denoted as e5.

**Table 4**

| Cell No. | Mixed mode | cell impedance after 50 cycles (Ω) | Increase in impedance compared to the initial state | SEM morphology to observe whether there was a gap at the interface |
|---|---|---|---|---|
| e1 | Grinding | 94 | 1.32 | No |
| e2 | Grinding | 105 | 1.43 | No |
| e3 | Grinding | 125 | 1.51 | No |
| e4 | Ball milling | 86 | 1.25 | No |
| e5 | Liquid-phase compounding | 164 | 2.05 | No |

### Comparative Example 1

In this comparative example, Li₃N, Li₃PS₄, and LiBr were used as a dual-ion conductor. The dual-ion conductor was uniformly mixed with PVDF as a self-repairing additive, and the self-repairing additive was uniformly dispersed in a Li₇P₃S₁₁ solid electrolyte by grinding, or Li₇P₃S₁₁, Li₃PS₄, and PEO were used as an electrolyte without adding a self-repairing additive. Li₄Ti₅O₁₂ was used as a positive electrode active material, and metallic Li was used as a negative electrode to assemble solid-state batteries.
1. 150 mg of Li₇P₃S₁₁ was weighed and placed in a ceramic sleeve having a diameter of 10 mm. The Li₇P₃S₁₁ placed in the ceramic sleeve was maintained under a pressure of 360 MPa for 10 min to obtain an electrolyte sheet. Li₄Ti₅O₁₂, Li₇P₃S₁₁, and Super-P were uniformly mixed at a mass ratio of 5:4:1 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disk having a diameter of 9 mm and placed on the other side of the electrolyte sheet, and the electrolyte sheet with the lithium foil was maintained under a pressure of 120 MPa for 5 min to obtain a cell. The obtained cell was denoted as f1.
2. 100 mL of acetonitrile was added to the stirring tank, and the PEO and LiTFSI were mixed uniformly at a mass ratio of 3:1 in a mortar to form a mixture. 3 g of the mixture was weighed into the stirring tank to form a blend component, and the blend component was stirred to obtain a slurry. The slurry was uniformly coated on the PTFE template, and then the PTFE template coated with the slurry was placed in a 55°C oven for drying for 6 h. After the temperature was lowered to room temperature, the dried electrolyte membrane was punched into a circular disk having a diameter of 16 mm, and the circular disk was quickly transferred to a glove box filled with argon gas for storage. The Li₄Ti₅O₁₂ pole piece was used as the positive electrode, and metallic Li was used as the negative electrode, and the obtained cell was denoted as f2.
3. Li₇P₃S₁₁ and Li₃N were mixed uniformly at a mass ratio of 19:1 in a mortar to obtain a blend component. 150 mg of the blend component was weighed, and the weighed blend component was placed in a ceramic sleeve having a diameter of 10 mm. The blend component placed in the ceramic sleeve was maintained under a pressure of 360 MPa for 10 min to obtain an electrolyte sheet containing a self-repairing additive. Li₄Ti₅O₁₂, Li₇P₃S₁₁, and Super-P were uniformly mixed at a mass ratio of 5:4:1 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disk having a diameter of 9 mm and placed on the other side of the electrolyte sheet, and the electrolyte sheet with the lithium foil was maintained under a pressure of 120 MPa for 5 min to obtain a cell. The obtained cell was denoted as f3.
4. 10g of PVDF dispersion with a mass fraction of 40% was weighed, and the weighed dispersion was added to a beaker. 1g of LiBr was added to the dispersion and stirred well to completely dissolve the LiBr to obtain a solution. After the water in the solution was completely removed by freeze-drying, the water-removed product was transferred to a vacuum oven and kept at 120°C for 6 h. After the temperature dropped to room temperature, the composite self-repairing additive was quickly transferred to an argon-filled glove box for storage. 150 mg of Li₇P₃S₁₁ solid electrolyte was weighed and placed in a ceramic sleeve with a diameter of 10 mm. The solid electrolyte placed in the ceramic sleeve was maintained under a pressure of 360 MPa for 10 min to obtain an electrolyte sheet. Li₄Ti₅O₁₂, Li₇P₃S₁₁, Super-P, and a composite self-repairing additive LiBr-PVDF at a mass ratio of 4.5:4:1:0.5 were mixed uniformly in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disk having a diameter of 9 mm and placed on the other side of the electrolyte sheet, and the electrolyte sheet with the lithium foil was maintained under a pressure of 120 MPa for 5 min to obtain a cell. The obtained cell was denoted as f4.
5. 150 mg of Li₇P₃S₁₁ was weighed and placed in a ceramic sleeve with a diameter of 10 mm, and the Li₇P₃S₁₁ placed in the ceramic sleeve was maintained under a pressure of 360 MPa for 10 min to obtain an electrolyte sheet. Li₄Ti₅O₁₂, Li₇P₃S₁₁, and Super-P were uniformly mixed at a mass ratio of 5:4:1 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disk having a diameter of 9 mm and placed on the other side of the electrolyte sheet, and 20 mg of LiBr was weighed and added to the metallic lithium side. The electrolyte sheet with the lithium foil and LiBr was maintained under a pressure of 120 MPa for 5 min to obtain a cell. The obtained cell was denoted as f5.
6. Li₇P₃S₁₁ and Li₃PS₄ were mixed uniformly at a mass ratio of 19:1 in a mortar to obtain a blend component. 150 mg of the blend component was weighed, and the weighed blend component was placed in a ceramic sleeve having a diameter of 10 mm. The blend component placed in the ceramic sleeve was maintained under a pressure of 360 MPa for 10 min to obtain an electrolyte sheet containing a self-repairing additive. Li₄Ti₅O₁₂, Li₇P₃S₁₁, and Super-P were uniformly mixed at a mass ratio of 5:4:1 in a mortar to obtain a mixture, and the mixture was used as a composite positive electrode. 5 mg of the mixture was weighed, and the weighed mixture was placed on one side of the electrolyte sheet. The electrolyte sheet with the mixture was maintained under a pressure of 360 MPa for 10 min. Then, a metallic lithium foil having a thickness of 100 µm was cut into a circular disc having a diameter of 9 mm and placed on the other side of the electrolyte sheet, and the electrolyte sheet with the lithium foil was maintained under a pressure of 120 MPa for 5 min to obtain a cell. The obtained cell was denoted as f6.
7. 150 mg of Li₃PS₄ was weighed and placed in a ceramic sleeve having a diameter of 10 mm, and the Li₃PS₄ placed in the ceramic sleeve was maintained under a pressure of 360 MPa for 10 min to obtain an electrolyte sheet. A metallic lithium foil having a thickness of 100 µm was cut into a circular disc having a diameter of 9 mm and placed on both sides of the electrolyte sheet, and the electrolyte sheet with the lithium foil was maintained under a pressure of 120 MPa for 5 min to obtain a lithium symmetric cell. The obtained cell was denoted as f7.

**Table 5**

| Cell No. | cell impedance after 50 cycles (Ω) | Increase in impedance compared to the initial state | SEM morphology to observe whether there was a gap at the interface |
|---|---|---|---|
| f1 | 4653 | 64.63 | Yes |
| f2 | 330 | 9.43 | Yes |
| f3 | 4872 | 76.13 | Yes |
| f4 | 5167 | 69.82 | Yes |
| f5 | 5317 | 83.08 | Yes |
| f6 | 4702 | 65.05 | Yes |
| f7 | 3806 | 94.31 | Yes |

| | | | |
|---|---|---|---|
| f1: Li₇P₃S₁₁ (a commonly used sulfide electrolyte) was used as the electrolyte, and a dual-ion conductor component having a self-repairing function was not added. The impedance of f1 increased rapidly, and the cell life was short; f2: PEO (a commonly used polymer electrolyte) was used as the electrolyte, and a dual-ion conductor component having a self-repairing function was not added. The impedance of f2 increased rapidly, and the cell life was short; f3: Li₃N was added into Li₇P₃S₁₁ (a common sulfide electrolyte) electrolyte, because Li₃N was not a dual-ion conductor component having a self-repairing function, the impedance of f3 increased rapidly, and the cell life was short; f4: LiBr and PVDF were compounded in a solution at a mass ratio of 1:4 and then added to Li₇P₃S₁₁ (a commonly used sulfide electrolyte) electrolyte. Since excessive PVDF bloceds the migration path of Br ions, the self-repairing function of the dual-ion conductor cannot be achieved. The impedance of f4 increased rapidly, and the cell life was short; f5: The addition of LiBr to the current collector side of the lithium metal negative electrode failed to achieve the self-repairing function of a dual-ion conductor. The impedance of f5 increased rapidly, and the cell life was short. f6: When Li₃PS₄ was added to Li₇P₃S₁₁ (a common sulfide electrolyte) electrolyte, the impedance of f6 increased rapidly, and the cell life was short, because Li₃PS₄ was not a dual-ion conductor component having a self-repairing function. f7: Li₃PS₄ (a commonly used sulfide electrolyte) was used as the electrolyte, and a dual-ion conductor having a self-repairing function was not added. The impedance of f7 increased rapidly, and the cell life was short; the AC impedance spectra of the cell d1 of Example 3 and the cell f1 of Comparative Example 1 in the original state and after 20 cycles and 50 cycles were shown in FIG. 1A and FIG. 1B. The cross-sectional electron micrographs after 50 cycles of f1, d1 and d7 were shown in FIG. 2, FIG. 3 and FIG. 5, respectively. The electron micrographs and the corresponding energy-dispersive X-ray spectra of the LiI particles in the original state and after 50 cycles of d7 were shown in FIG. 4. The in-situ X-ray photoelectron spectra at the negative electrode interface of d1 during charge and discharge were shown in FIG. 6. | | | |

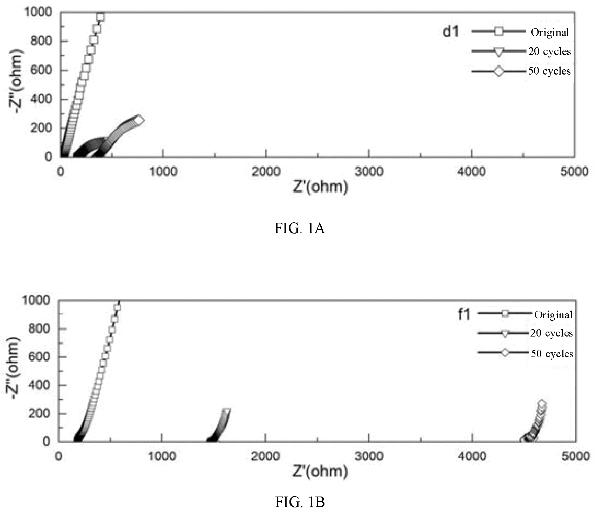

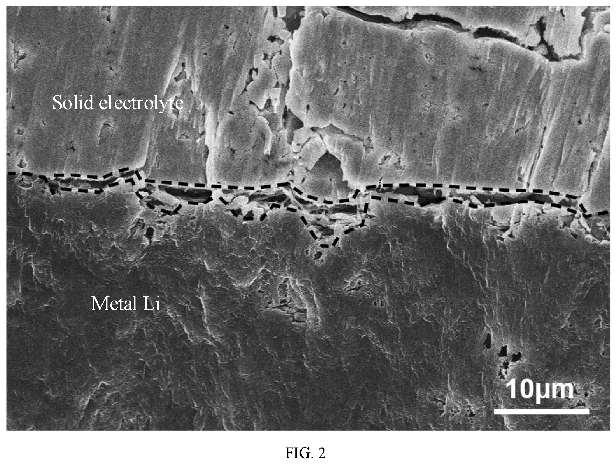

FIG. 1B shows that the impedance of f1 increases rapidly, while FIG. 1A shows that the impedance of d1 increases only slightly. FIG. 2 shows that a large number of pores and cracks appear at the interface between a lithium negative electrode and an electrolyte after cycling without the addition of a dual-ion conductor component having a self-repairing function. The lithium negative electrode is largely detached from the electrolyte interface and is no longer in contact. This also explains why the impedance is too large after f1 cycling.

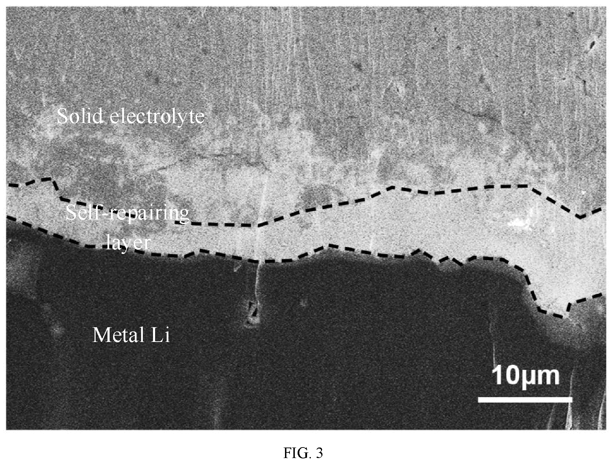

FIG. 3 shows that using the dual-ion conductor Li_{3.2}PS₄I_{0.2} as the electrolyte, a self-adaptive interface layer is formed between the lithium negative electrode and the electrolyte after 50 cycles of d1, maintaining the interface conformal. In contrast to FIG. 2, the self-repairing function of the dual-ion conductor Li_{3.2}PS₄I_{0.2} for the interface solves the problem of the lithium negative electrode losing contact with the electrolyte after charge-discharge cycling.

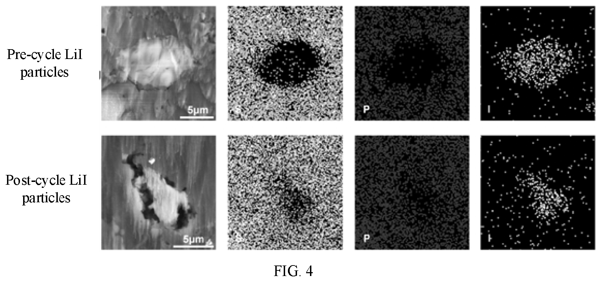

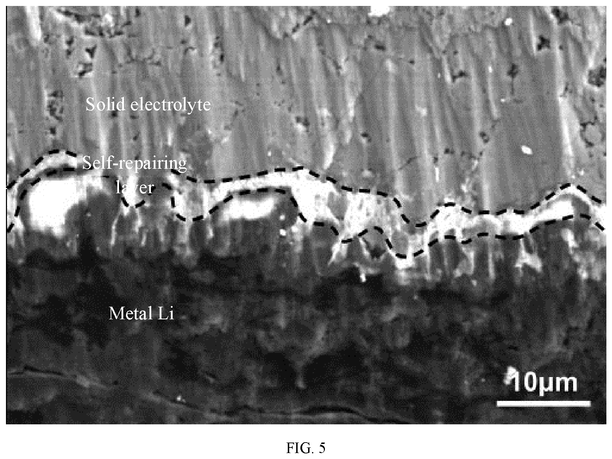

FIG. 4 shows that after simply mixing 5 mass% of LiI into the Li₆PS₅Cl electrolyte, the LiI particles in the electrolyte decrease during cycling. FIG. 5 shows that a self-repairing layer is also formed between the lithium negative electrode and the electrolyte.

In conjunction with FIG. 3, it can be seen that LiI having self-repairing function, whether doped or simply mixed with the sulfide electrolyte, can achieve its self-repairing function.

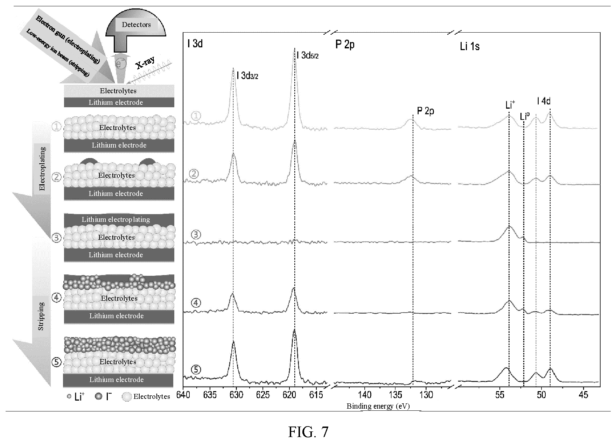

FIG. 7 shows that the signals of iodine (I3d, I4d) and lithium (Li1s) increase during discharge, but the signal of phosphorus (P2p) does not appear, indicating the formation of a LiI layer at the negative electrode interface.

The cross-sectional electron micrograph and the corresponding energy dispersive X-ray spectrum after the first discharge and charge of the cell d1 of Example 3 are shown in FIG. 6.

FIG. 6 shows that after the initial discharge, a self-repairing layer of about 2.6 microns thick is formed between the lithium negative electrode and the electrolyte, and after charging, the thickness of the self-repairing layer decreases to about 1.6 microns, indicating that the LiI self-repairing layer is capable of migrating back and forth between the interface and the electrolyte during charging and discharging.

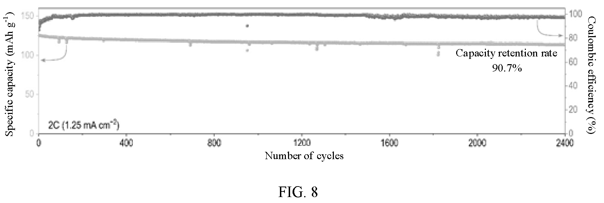

The cycling capacity retention rate and Coulombic efficiency of the cell d1 of Example 3 are shown in FIG. 8. An all-solid-state lithium metal pouch cell assembled and prepared according to the scheme of d1 and its cycling capacity retention are shown in FIG. 9.

FIG. 8 shows that the d1 cell capacity retention rate reaches 90.7% and the coulombic efficiency is stably maintained at 99.9% after 2400 charge-discharge cycles.

FIG. 9 shows that after the all-solid-state lithium metal pouch cell assembled and prepared according to the scheme of d1 is cycled for 2 times under an additional stacking pressure of 20 MPa and the stacking pressure is released, the capacity of the pouch cell is maintained at 95% for stable cycling, thus achieving stable cycling of the zero-pressure all-solid-state lithium metal pouch cell.

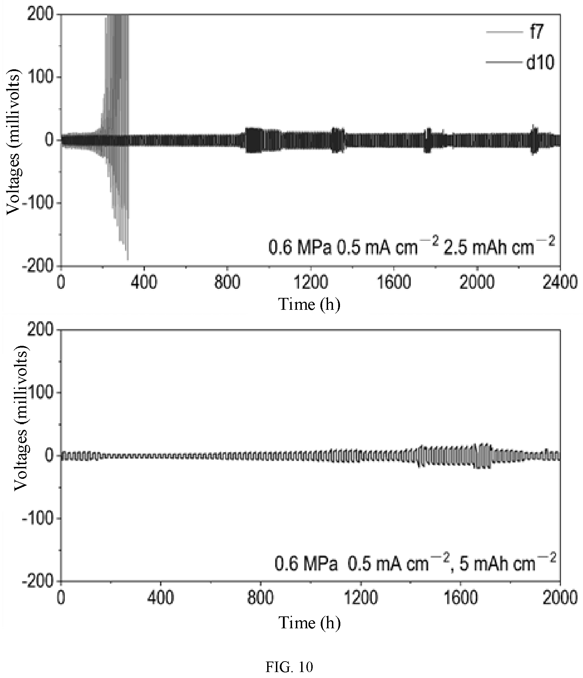

A comparison of cycle data at an areal capacity of 2.5 mAh cm⁻² for cell d10 of Example 3 and cell f7 of Comparative Example 1, and the cycle data at an areal capacity of 5 mAh cm⁻² for f7, is shown in FIG. 10. FIG. 10 shows that, compared to cell f7 with Li₃PS₄ as the electrolyte, wherein the polarization overpotential rapidly increased leading to cell failure within the first 400 h of cycling, cell d10 with the dual-ion conductor Li_{3.2}PS₄I_{0.2} having a self-repairing function as the electrolyte maintained stable polarization overpotential after 2400 h of cycling. Even when the areal capacity is increased to 5 mAh cm⁻², d10 of the present invention can stably cycle for more than 2000 h.

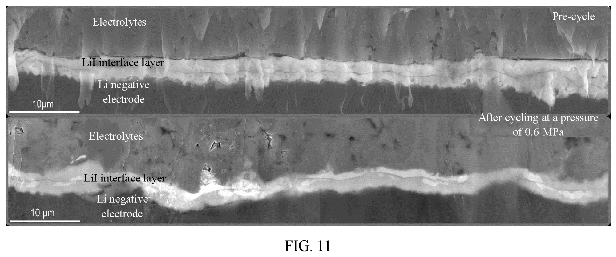

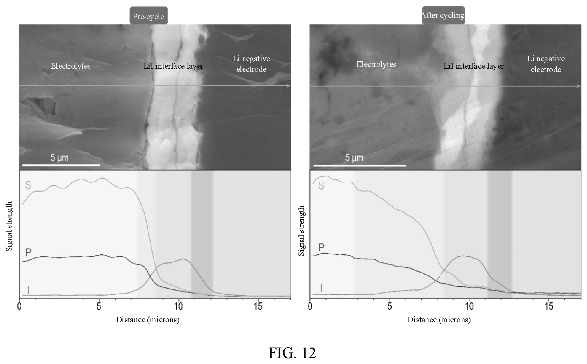

Large-area cross-sectional electron micrograph of cell d5 from Example 3 in the original state and after 50 cycles are shown in Figure 11,, and the energy dispersive X-ray spectrum at the interface is shown in FIG. 12.

FIG. 11 shows that there are pores at the interface between the LiI layer and electrolyte before cycling because of the solid-to-solid contact problem. After 50 cycles, the LiI layer is in close contact with the electrolyte, and the pores and cracks disappear.

FIG. 12 shows that after 50 cycles, iodine element is distributed from the interface to a region of the electrolyte layer at a depth of about 5 microns. In conjunction with FIGs. 11 and 6, it can be seen that the LiI self-repairing layer can migrate back and forth between the interface layer and the electrolyte during charging and discharging to accommodate the volume effect of the lithium negative electrode and maintain the interface conformal, thereby avoiding contact failure between the negative electrode and the electrolyte.

## Claims

1. Use of a dual-ion conductor compound in improving the stability of the mechanical structure of an interface layer between a negative electrode and an electrolyte in an energy storage device, the energy storage device including a lithium-ion energy storage device and a sodium-ion energy storage device, and including a positive electrode, an electrolyte, and a negative electrode;
wherein, during charging and discharging, a cation and a halogen anion of the dual-ion conductor compound are capable of simultaneously migrating back and forth between the interface layer and the electrolyte under the driving of an electric field;
the dual-ion conductor compound is selected from one or more of alkali metal halides, alkaline earth metal halides, and halide-doped sulfides.

2. The use according to claim 1, wherein the alkali metal halide is a lithium halide and/or a sodium halide;
preferably, the alkali metal halide is selected from one or more of LiI, LiBr, LiCl, LiF, NaI, NaBr, NaCl, and NaF; more preferably, the alkali metal halide is selected from one or more of LiI, LiBr, NaI, and NaBr; most preferably, the alkali metal halide is LiI and/or NaI;
preferably, the alkaline earth metal halide is a magnesium halide;
preferably, the alkaline earth metal halide is MgI₂ and/or MgBr₂; more preferably, the alkaline earth metal halide is MgI₂;
preferably, the halide-doped sulfide is selected from one or more of Na₃₊ₓPS₄Brₓ, Li₃₋ₓPS₄₋ₓBrₓ, Li₃₊ₓPS₄Iₓ, Li₃₋ₓPS₄₋ₓIₓ, Li₆₊ₓP₂S₈Iₓ, and Li₆₊ₓP₂S₈Brₓ, wherein 0.1 ≤ x ≤ 2; more preferably, the halide-doped sulfide is Li₃₊ₓPS₄Iₓ and/or Li₆₊ₓP₂S₈Iₓ, wherein 0.1 ≤ x ≤ 2.

3. The use according to claim 1, wherein the dual-ion conductor compound is a halide-doped sulfide, and the dual-ion conductor compound is the electrolyte or the interface layer between the electrolyte and the negative electrode, or is uniformly dispersed as an additive in the positive electrode, the electrolyte, or the interface layer between the electrolyte and the negative electrode.

4. The use according to claim 1, wherein the dual-ion conductor compound is selected from one or more of alkali metal halides and alkaline earth metal halides, and the dual-ion conductor compound is uniformly dispersed as an additive in the positive electrode, the electrolyte, or the interface layer between the electrolyte and the negative electrode.

5. The use according to claim 1, wherein the dual-ion conductor compound is used in combination with an additional non-functional component.

6. The use according to claim 4, wherein when the dual-ion conductor compound is uniformly dispersed as the additive in the positive electrode, the electrolyte, or the interface layer between the electrolyte and the negative electrode, the dual-ion conductor compound accounts for 0.1 wt% to 50 wt%, preferably 0.1 wt% to 30 wt%, of the positive electrode, the electrolyte, or the interface layer between the electrolyte and the negative electrode.

7. The use according to claim 3, wherein when the dual-ion conductor compound is uniformly dispersed as the additive in the positive electrode, the electrolyte, or the interface layer between the electrolyte and the negative electrode, the dual-ion conductor compound accounts for 0.1 wt% to 50 wt% of the positive electrode, and accounts for 1 wt% or more and less than 100 wt% of the electrolyte or the interface layer between the electrolyte and the negative electrode.

8. The use according to claim 1, wherein the halogen anion of the dual-ion conductor compound is capable of migrating back and forth under the driving of an electric field during charging and discharging, thereby forming a dynamic self-adaptive interface layer of a halide between the negative electrode and the electrolyte, naturally adjusting the morphology of the interface layer and self-adaptively repairing cracks and pores, generated by the negative electrode due to volume effects, to ensure an intimate solid-to-solid contact between the negative electrode and the solid electrolyte during stripping/electroplating.

9. A method for improving stability of the mechanical structure of an interface layer between a negative electrode and an electrolyte in an energy storage device, the energy storage device including a lithium-ion energy storage device and a sodium-ion energy storage device, and including a positive electrode, an electrolyte, and a negative electrode, the method comprising the following steps:
disposing a dual-ion conductor compound as the electrolyte or as an interface layer between the electrolyte and the negative electrode, or uniformly dispersing the dual-ion conductor compound as an additive in the positive electrode, the electrolyte, or the interface layer between the electrolyte and the negative electrode;
wherein, during charging and discharging, a cation and a halogen anion of the dual-ion conductor compound are capable of simultaneously migrating back and forth between the interface layer and the electrolyte under driving of an electric field;
when a dual-ion conductor compound is used as the electrolyte or the interface layer between the electrolyte and the negative electrode, the dual-ion conductor compound is a halide-doped sulfide;
when the dual-ion conductor compound is uniformly dispersed as an additive in the positive electrode, the electrolyte, or the interface layer between the electrolyte and the negative electrode, the dual-ion conductor compound is selected from one or more of an alkali metal halide, an alkaline earth metal halide, and a halide-doped sulfide.

10. The method according to claim 9, wherein the alkali metal halide is a lithium halide and/or a sodium halide;
preferably, the alkali metal halide is selected from one or more of LiI, LiBr, LiCl, LiF, NaI, NaBr, NaCl, and NaF; more preferably, the alkali metal halide is selected from one or more of LiI, LiBr, NaI, and NaBr; most preferably, the alkali metal halide is LiI and/or NaI;
preferably, the alkaline earth metal halide is a magnesium halide;
preferably, the alkaline earth metal halide is MgI₂ and/or MgBr₂; more preferably, the alkaline earth metal halide is MgI₂;
preferably, the halide-doped sulfide is selected from one or more of Na₃₊ₓPS₄Brₓ, Li₃₋ₓPS₄₋ₓBrₓ, Li₃₊ₓPS₄Iₓ, Li₃₋ₓPS₄₋ₓIₓ, Li₆₊ₓP₂S₈Iₓ, and Li₆₊ₓP₂S₈Brₓ, wherein 0.1 ≤ x ≤ 2; more preferably, the halide-doped sulfide is Li₃₊ₓPS₄Iₓ and/or Li₆₊ₓP₂S₈Iₓ, wherein 0.1 ≤ x ≤ 2.

11. The method according to claim 9, wherein the dual-ion conductor compound is used in combination with an additional non-functional component.

12. The method according to claim 9, wherein when the dual-ion conductor compound is uniformly dispersed as the additive in the positive electrode, the electrolyte, or the interface layer between the electrolyte and the negative electrode, the dual-ion conductor compound is selected from one or more of alkali metal halides and alkaline earth metal halides, and the dual-ion conductor compound accounts for 0.1 wt% to 50 wt%, preferably 0.1 wt% to 30 wt%, of the positive electrode, the electrolyte, or the interface layer between the electrolyte and the negative electrode.

13. The method according to claim 9, wherein when the dual-ion conductor compound is uniformly dispersed as the additive in the positive electrode, the electrolyte, or the interface layer between the electrolyte and the negative electrode, the dual-ion conductor compound is a halide-doped sulfide, and the dual-ion conductor compound accounts for 0.1 wt% to 50 wt% of the positive electrode, and accounts for 1 wt% or more and less than 100 wt% of the electrolyte or the interface layer between the electrolyte and the negative electrode.

14. The method according to claim 9, wherein the halogen anion of the dual-ion conductor compound is capable of migrating back and forth under the driving of an electric field during charging and discharging, thereby forming a dynamic self-adaptive interface layer of a halide between the negative electrode and the electrolyte, naturally adjusting the morphology of the interface layer and self-adaptively repairing cracks and pores, generated by the negative electrode due to volume effects, to ensure an intimate solid-to-solid contact between the negative electrode and the solid electrolyte during stripping/electroplating.
